Europäisches Patentamt

European Patent Office

Office européen des brevets

(19)

(11) Numéro de publication: **0 155 891**
**B1**

(12) **FASCICULE DE BREVET EUROPEEN**

(45) Date de publication du fascicule du brevet: **27.06.90**

(51) Int. Cl.⁵: **G 01 N 21/64**

(21) Numéro de dépôt: **85400462.9**

(22) Date de dépôt: **11.03.85**

(54) **Procédé de dosage de traces d'uranium en solution par spectrofluorimétrie à résolution temporelle.**

(30) Priorité: **16.03.84 FR 8404094**

(43) Date de publication de la demande:
**25.09.85 Bulletin 85/39**

(45) Mention de la délivrance du brevet:
**27.06.90 Bulletin 90/26**

(84) Etats contractants désignés:
**BE DE FR GB**

(56) Documents cités:
**EP-A-0 028 322**
**US-A-4 198 568**
**US-A-4 239 964**

**ANALYTICAL CHEMISTRY, vol. 44, no. 6, mai 1972, pages 948-956, Washington D.C., US; R.P. FISHER et al.: "Pulsed source-time resolved phosphorimetry"**

(73) Titulaire: **COMMISSARIAT A L'ENERGIE ATOMIQUE**
**31/33, rue de la Fédération**
**F-75015 Paris (FR)**

(72) Inventeur: **Mauchien, Patrick**
**97, rue de Paris**
**F-91400 Orsay (FR)**
Inventeur: **Cauchetier, Philippe**
**1, Square Yves du Manoir**
**F-91300 Massy (FR)**

(74) Mandataire: **Mongrédien, André et al**
**c/o BREVATOME 25, rue de Ponthieu**
**F-75008 Paris (FR)**

Courier Press, Leamington Spa, England.

## Description

La présente invention se rapporte aux techniques utilisées pour doser des traces d'uranium présentes dans une solution aqueuse à l'aide de la méthode connue de spectrofluorimétrie.

Lorsque l'on veut doser de l'uranium à l'état de traces dans des solutions, notamment par exemple dans des effluents radioactifs, on sait que la spectrofluorimétrie est actuellement la méthode la mieux adaptée et la plus couramment utilisée. (Voir à ce sujet, par exemple, l'article "Dosage de traces d'uranium dans une usine de retraitement" AIEA Nuclear Safeguards Technology 1982, Vol. 1) 260/25.

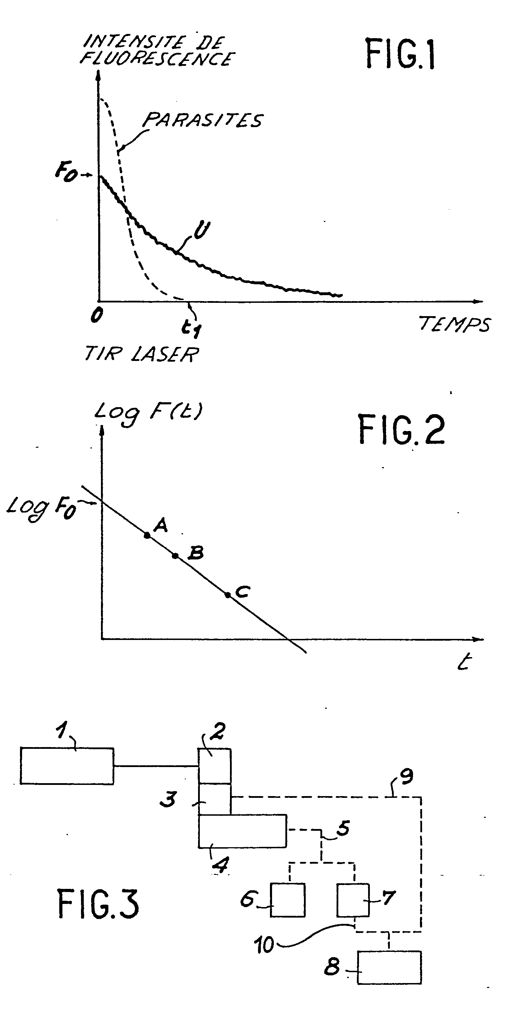

On sait également que lorsque travaille en solution pure, la limite de détection d'une telle méthode se situe au voisinage de 10 µgl$^{-1}$ et que cette limite est une conséquence de la présence de phénomènes d'émissions parasites qui se superposent dans la solution au spectre de fluorescence de l'uranium lui-même. La figure 1 illustre comment décroissent en fonction du temps porté en abscisses les intensités de fluorescence portées en ordonnées de l'uranium proprement dit et de tous les composés parasites se trouvant dans la solution. Cette superposition pendant un temps $t_1$ (jusqu'à la décroissance totale de l'émission parasite) de la fluorescence parasite et de la fluorescence de l'uranium rend l'interprétation des résultats délicate. Pour les cas courants, le temps $t_1$ est de l'ordre de 20 µs alors que la décroissance de l'uranium demande environ 400 µs.

Or, pour certaines applications, comme par exemple le dosage d'uranium dans les eaux de ruissellement, ou de solutions très chargées en éléments inhibiteurs, il est nécessaire de disposer d'une technique plus sensible qui permette d'atteindre la mesure de traces ayant des niveaux de l'ordre de 1 µgl$^{-1}$.

Le brevet canadien No. 1 064 726 pour "Apparatus and Method for Uranium Determination" fait connaître une méthode qui permet d'atteindre de telles performances grâce à l'utilisation d'un laser pulsé comme source d'excitation. L'appareillage correspondant, commercialisé par la firme canadienne SCINTREX Ltd sous l'appellation "UA3" repose sur le fait que l'on peut constater effectivement sur la figure 1 que le temps de vie de fluorescence de l'uranium est nettement plus long que celui des matières organiques qui sont à l'origine des perturbations parasites dont il a été précédemment question.

En effectuant ainsi la mesure de fluorescence au bout d'un temps suffisamment long après chaque tir pour que l'émission des matières organiques ait complètement disparu, on peut alors espérer mesurer un signal qui soit spécifique de l'uranium.

Cette technique de mesure permet dans certaines conditions d'abaisser la limite de détection au voisinage d'une teneur de 0,05 µgl$^{-1}$ pour cet appareillage, ce qui constitue une performance suffisante pour le dosage des eaux de ruissellement tel qu'on l'effectue par exemple lors des opérations de prospection des sites géologiques.

Un tel appareil connu présente néanmoins encore des inconvénients qui peuvent parfois être extrémement gênants et que l'on peut grouper pratiquement autour de trois points principaux qui sont les suivants:

1) le dispositif optique prévu dans l'appareil ne comporte pas de système dispersif permettant d'obtenir le spectre donnant l'intensité de fluorescence en fonction de la longueur d'onde d'émission. Or, comme ce spectre est parfaitement caractéristique de l'uranium, son enregistrement est le seul moyen de s'assurer que le signal mesuré correspond à l'uranium;

2) l'appareil comporte une fenêtre temporelle de mesure positionnée de façon fixe à 30 microsecondes après chaque tir laser. Ce mode de fonctionnement repose sur l'hypothèse selon laquelle le signal reçu à 30 microsecondes ne peut provenir que de l'uranium, c'est-à-dire que le temps $t_1$ de la figure 1 est toujours inférieur à 30 microsecondes, or cette hypothèse n'est pas toujours vérifiée. De plus dans certains cas, notamment lorsque l'uranium est mélangé avec des inhibiteurs de fluorescence, le signal dû à l'uranium décroît beaucoup plus rapidement si bien qu'il devient pratiquement nul à l'époque 30 microsecondes. Il est dans ce cas indispensable de pouvoir déplacer la fenêtre pour optimiser le signal;

3) l'appareil Scintrex ne permet pas de mesurer le temps de vie de l'état excité de l'uranium, ou, ce qui revient au même, de suivre la décroissance de sa fluorescence au cours du temps. Or cette mesure constitue un renseignement précieux sur la composition de la solution et elle est à la base de la présente invention.

En effet, les dosages avec l'appareil canadien sont effectués selon la méthode des ajouts connus qui consiste à mesurer l'intensité d'une raie de fluorescence donnée de l'uranium,

a) pour la solution à doser,

b) pour des solutions dérivées de la précédente et dans lesquelles on a ajouté à chaque fois des quantités connues d'uranium.

Cette méthode connue a le grave inconvénient de nécessiter la préparation successive d'au moins 2 ou 3 solutions, d'interdire toute mesure rapide et de conduire à la destruction de la solution initiale à doser.

Le document "Pulsed Source-Time Resolved Phosphorimetry" par R. P. Fisher et J. D. Winefordner publié p. 948 et suivantes de la revue Analytical Chemistry, vol. 44, No. 6, de mai 1972 fait état d'une méthode de phosphorimétrie utilisant une source pulsée. Les intensités des signaux de phosphorescence sont mesurés à différentes époques après la fin de l'excitation par la source pour déduire les compositions de mélange binaires ou ternaires. L'emploi d'une source pulsée augmente la sensibilité et la sélectivité de la mesure.

La présente invention a précisément pour objet un procédé de dosage de traces d'uranium en solution par la méthode connue de spectrofluorimétrie qui en permettant d'atteindre et de mesurer le temps de décroissance ou temps de vie de la fluorescence de l'uranium, conduit, à l'aide de moyens remarquablement simples, à s'affranchir de tous les inconvénients de l'art antérieur rappelé précédemment.

Ce procédé de dosage de traces d'uranium en solution dans un milieu par la méthode connue de spectrofluorimétrie qui consiste à exciter la fluorescence des molécules d'uranium dans la solution par un tir laser pulsé, et à étudier la courbe de décroissance exponentielle de cette fluorescence, se caractérise en ce qu'on en déduit la valeur $F_0$ de cette même fluorescence immédiatement à la fin de chaque impulsion laser et à une longueur d'onde choisie par l'opérateur dans le spectre de fluorescence caractéristique de l'uranium et qu'on la compare à la valeur $F'_0$ obtenue pour une solution d'uranium étalon, comportant une quantité connue d'uranium dans un milieu différent du milieu à examiner.

L'originalité profonde de la présente invention réside dans le fait d'avoir mis en évidence qu'il était possible, grâce à la mesure de la courbe de décroissance de l'intensité de fluorescence de l'uranium, d'accéder à la valeur $F_0$ de cette fluorescence immédiatement à la fin de chaque impulsion du tir laser.

En effet, la fluorescence, fonction du temps $F(t)$ peut s'écrire à chaque instant selon l'équation (1):

$$F(t)=F_0 e^{-t/\tau} \qquad (1)$$

expression dans laquelle $F_0$ est précisément la valeur de cette fluorescence à la fin de chaque impulsion du tir laser. Par ailleurs, la valeur $F_0$ de cette fluorescence initiale, peut s'écrire selon l'équation (2):

$$F_0=k\,\varepsilon.l.t_{irr}.[UO_2^{2+}] \qquad (2)$$

formule dans laquelle k est un facteur d'appareillage, $\varepsilon$ est le coefficient d'absorption molaire de l'uranyle à la longueur d'onde du laser, l est l'intensité de la raie laser, $t_{irr}$ est le temps d'irradiation de chaque impulsion, le plus souvent de l'ordre de 5 nanosecondes, $[UO_2^{2+}]$ est la concentration des molécules d'uranyle dans la solution à examiner.

On voit donc que pour des conditions de fonctionnement du laser déterminées, la valeur $F_0$ est proportionnelle à la concentration d'uranium que l'on désire précisément mesure. Or, cette grandeur $F_0$ n'est pas directement accessible en général en raison des phénomènes d'émission parasite déjà envisagés et qui masquent la fluorescence de l'uranium en se superposant à elle-même pendant un temps $t_1$ plus ou moins long après chaque impulsion d'excitation.

En revanche, si l'on mesure $F(t)$ pour différentes valeurs du temps t choisies au-delà de $t_1$ de façon que la fluorescence parasite ait disparu, on peut tracer la droite représentée sur la figure 2 et dont l'équation correspond au logarithme de l'équation (1) précédente, c'esp-à-dire:

$$LF(t)=LF_0-t/\tau \qquad (3)$$

En traçant expérimentalement plusieurs points, tels que par exemple les points A, B, C sur la figure 2, on trace ainsi une droite dont la pente donne la valeur de $1/\tau$, et l'ordonnée à l'origine, la valeur du logarithme de $F_0$ c'est-à-dire permettant finalement le calcul de la valeur $F_0$.

Or, la demanderesse a mis en évidence, ce qui est un résultat remarquable, que dans des conditions expémentales fixées (caractéristiques du laser émetteur et forme géométrique du récipient de mesure), cette valeur $F_0$ est une constante indépendante du milieu de mesure. Il est donc ainsi possible en comparant la valeur $F_0$ obtenue sur un échantillon à doser avec la valeur correspondante $F'_0$ obtenue sur un échantillon de solution étalon, fabriqué en laboratoire et contenant une quantité connue d'uranium, d'obtenir le dosage direct d'une solution par un simple étalonnage externe qui consiste à comparer le résultat obtenu sur l'échantillon à celui d'une solution de référence.

Ce résultat constitue une novation remarquable et importante, puisque dans toutes les autres méthodes fluorimétriques connues, qu'il s'agisse d'excitation continue (lampe à ultraviolets par exemple) ou d'une méthode à résolution temporelle pratiquée avec un laser à tir pulsé, le signal obtenu dépendait étroitement du milieu et des conditions de mesure. Il était alors nécessaire d'utiliser la méthode d'ajouts dosé, requérant la préparation d'au moins trois solutions pour chaque échantillon, ce qui constituait un handicap important dans la plupart des applications industrielles où des modes opératoires simples et répétitifs de façon rapide sont évidemment recherchés.

De toute façon, l'inention sera mieux comprise en se référant à la description qui suit d'un exemple de mise en oeuvre donné à titre illustratif et non limitatif en se référant à la figure 3 qui décrit très schématiquement un appareillage utilisé.

Sur la figure 3 on a représenté de façon schématique un laser à azote 1 travaillant sur la longueur d'ondes de 337 namomètres et émettant à la fréquence de 30 Hz des impulsions d'une durée de 5 nanosecondes. Bien entendu, ces valeurs sont données à titre indicatif et pourraient être modifiées en plus ou en moins sans que l'on sorte pour autant du cadre de la présente invention.

On a également représenté sur la figure 3, la cellule 2 ou compartiment de mesure contenant les molécules d'uranium à doser à la valence 6 en milieu phosphate acide $PO_4H_3$. Derrière la cellule de mesure 2 se trouve un monochromateur 3 qui sélectionne précisément la longueur d'onde choisie pour l'examen de la fluorescence et un photomultiplicateur 4 qui délivre sur sa ligne de sortie 5 des signaux électriques correspondant à chaque instant à l'intensité de la fluorescence émise dans le compartiment de mesure 2. Ces signaux électriques sont répartis entre un oscilloscope 6 qui permet de visualiser les signaux reçus et un moyenneur 7 qui permet à la fois de positionner la fenêtre de lecture dans le temps au-delà de l'époque $t_1$ de la figure 1 et de mesurer l'intensité correspondant à cette position de fenêtre. Ce moyenneur 7 est par exemple du type BOXCAR EGC modèle 162.

Enfin, un ordinateur 8 du type Hewlett Packard modèle HP86 permet l'acquisition des données issues de moyenneur 7 ainsi que le pilotage, par l'intermédiaire de la ligne 9, du monochromateur 3 et par la ligne 10 du positionnement de la fenêtre de mesure.

Les performances actuelles du montage de la figure 3 sont les suivantes.

Le tracé des spectres de fluorescence en solution pure est possible jusqu'à des teneurs de l'ordre de 0,02 µgl⁻¹ environ. Ce résultat compte parmi les meilleurs obtenus à ce jour. La précision des mesures d'intensité qui peuvent être effectuées sur ces spectres dépend du niveau de teneur considérée, la reproductibilité des mesures étant d'environ 10 à 15% pour les teneurs voisines de 1 µg.l⁻¹.

En ce qui concerne la mesure des temps de vie, étape essentielle du procédé objet de l'invention, les performances peuvent dans ce domain être jugées d'un double point de vue.

Le premier point de vue concerne la sensibilité de la mesure. L'appareil de la figure 3 permet, pour les solutions relativement pures dans lesquelles le temps de vie est supérieur à 100 microsecondes, d'effectuer des mesures jusqu'à des teneurs voisines de 0,1 µgl⁻¹, avec une reproductibilité de l'ordre de 10%. Un tel résultat ne peut être atteint à notre connaissance à l'aide d'aucun appareillage commercialisé actuellement.

Le second point de vue concerne l'aspect cinétique de la réponse de la chaîne de mesure. Le montage décrit sur la figure 3 permet, pour des solutions plus concentrées allant par exemple jusqu'à quelques milligrammes par litre au moins, la mesure de temps de vie jusqu'à 1 microseconde environ avec une reproductibilité de l'ordre de 5%.

En ce qui concerne la mesure fondamentale de la fluorescence initiale $F_0$, les performances obtenues dans ce domain sont liées à la mesure des temps de vie. La limite de détection, en solution pure, se situe au voisinage de 0,1 µgl⁻¹. De tels résultats permettent d'envisager favorablement le dosage par simple étalonnage externe de la plupart des solutions soumises à la demande. Il n'existe pas en effet à l'heure actuelle sur le marché d'appareillage permettant d'effectuer ce type de mesure qui présente un intérêt majeur dans tous les cas où l'on utilise le dosage de l'uranium comme un moyen de contrôle de procédé industriel. Le procédé objet de la présente invention permet dans ce cas une simplification des modes opératoires particulièrement importante et occasionne de ce fait des gains de temps également considérables.

Enfin, l'utilisation du procédé objet, de l'invention conduit à limiter de façon très intéressante le volume des effluents résultant des analyses.

**Revendications**

1. Procédé de dosage de traces d'uranium en solution dans un milieu par la méthode connue de spectrofluorimétrie qui consiste à exciter la fluorescence des molécules d'uranium dans la solution par un tir laser pulsé et à étudier la courbe de décroissance exponentielle de cette fluorescence, caractérisé en ce qu'on en déduit la valeur $F_0$ de cette même fluorescence immédiatement à la fin de chaque impulsion laser et à une longueur d'onde choisie par l'opérateur dans le spectre de fluorescence caractéristique de l'uranium et qu'on la compare à la valeur $F'_0$ obtenue pour une solution d'uranium étalon, comportant une quantité connue d'uranium dans un milieu différent du milieu à examiner.

2. Procédé de dosage de traces d'uranium selon la revendication 1, caractérisé en ce que la fréquence des impulsions du laser est de l'ordre de 30 Hz, et en ce que la durée de chaque impulsion est de 5 nanosecondes.

**Patentansprüche**

1. Verfahren zur Bestimmung von Spuren von gelöstem Uran in einem Milieu nach dem bekannten Spektrofluorometrie-Verfahren, das darin besteht, mit einem pulsierenden Laserstrahl die Fluoreszenz der Uranmoleküle in der Lösung anzuregen und die Kurve der exponentiellen Abnahme dieser Fluoreszenz zu untersuchen, dadurch gekennzeichnet, daß man den Wert $F_0$ von dieser gleichen Fluoreszenz sofort am Ende jedes Laserimpulses bei einer vom Operateur aus dem charakteristischen Fluoreszenzspektrum von Uran ausgewählten Wellenlänge ermittelt und ihn mit dem Wert $F'_0$ vergleicht, der bei einer Uran-Eichlösung erhalten wird, die eine bekannte Menge Uran in einem von dem zu untersuchenden Milieu verschiedenen Milieu enthält.

2. Verfahren zur Bestimmung von Uranspuren nach Anspruch 1, dadurch gekennzeichnet, daß die Impulsfrequenz des Lasers in der Größenordnung von 30 Hz liegt und daß die Dauer jedes Impulses 5 ns beträgt.

**Claims**

1. Process for the determination of uranium traces in solution in a medium by the known spectrofluorimetry method consisting of exciting the fluorescence of the uranium molecules in the solution by a pulsed laser shot and studying the exponential decay curve of said fluorescence, characterized in that from it is deduced the value $F_0$ of said same fluorescence immediately at the end of each laser pulse and at a wavelength chosen by the operator in the fluorescence spectrum characteristic of the uranium and it is compared with the value $F'_0$ obtained for a standard uranium solution having a known uranium quantity in a medium different from that to be examined.

2. Process for the determination of uranium traces according to claim 1, characterized in that the frequency of the laser pulses is approximately 30 Hz and in that the duration of each pulse is 5 nanoseconds.

EP 0 155 891 B1

FIG.1

FIG.2

FIG.3

1